# EUROPEAN PATENT APPLICATION

(11) **EP 4 667 193 A1**
(43) Date of publication of application: **24.12.2025**
(21) Application number: 24206653.8
(22) Date of filing: 15.10.2024
(51) Int. Cl.: B29C 65/16, B29L 22/02, B29L 31/30, B29L 31/00

(54) **LASER-WELDED ARTICLE AND METHOD THEREFOR**

(30) Priority: 19.06.2024 US 202418747668
(71) Applicant: Lear Corporation, Southfield, MI 48033 (US)
(72) Inventor: Blair, Samuel, Rochester, MI, 48306 (US); Abdella, David, Farmington Hills, MI, 48336 (US)
(74) Representative: Grünecker Patent- und Rechtsanwälte PartG mbB

(57) **Abstract**

A method of welding comprises stacking three polymer film layers (54a, 54b, 54c), directing a first laser beam (L1) to the stack (54) to weld along first welding path and then directing a second laser beam (L2) of a different wavelength to the stack (54) to weld along a second welding path offset from the first, e.g. parallel thereto. The first layers (54a) is opaque to the first laser (L1) while the second and third layers (54b, 54c) are transparent to it. Meanwhile, the second layer (54b) is opaque to the second laser (L2) while the third layer (54c) may be transparent to it. In this way, welds are formed between different layers in the stack (54). The opacity of the layers for the respective lasers (L1, L2) may be due to additives, such as carbon black. This method is preferably used to produce an inflatable bladder or cushion for a car seat.

## Description

### BACKGROUND

Automobile seats may include a massage assembly that has inflatable cells or bladders. The bladders are connected via air supply lines to a valve arrangement. A pump provides air to the valve arrangement, which directs the air to the bladders to be inflated. The bladders may be inflated and deflated in a sequence to provide a desired massage effect to the seat occupant. The bladders are made from polymer films that are welded together to provide an airtight chamber in the bladder. The configuration of the bladder and the welding process to make it can be labor intensive. For instance, high-frequency (HF) welding has been used to weld polymer films. However, HF welding requires that the welding dies that generate the weld have physical access to the weld location. For a complicated configuration, such as a bladder with many layers that are to be welded, physical access often requires the layers that are not being welded to be folded, pinned, or otherwise held out of the way.

### BRIEF DESCRIPTION OF THE DRAWINGS

The various features and advantages of the present disclosure will become apparent to those skilled in the art from the following detailed description. The drawings that accompany the detailed description can be briefly described as follows.
Figure 1 illustrates a seat for an automobile.
Figure 3 illustrates portions of a seat system.

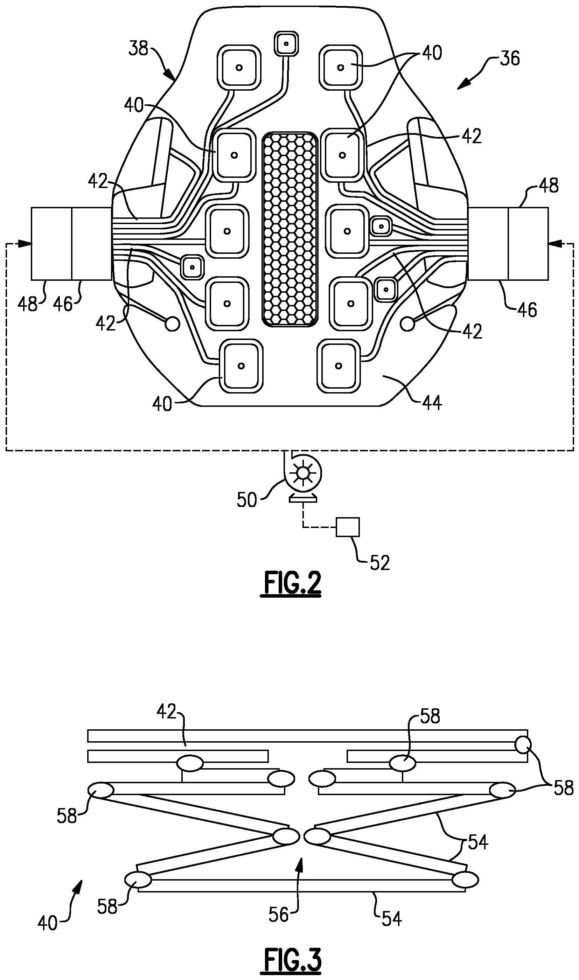

Figure 3 illustrates a sectioned view through an inflatable bladder.

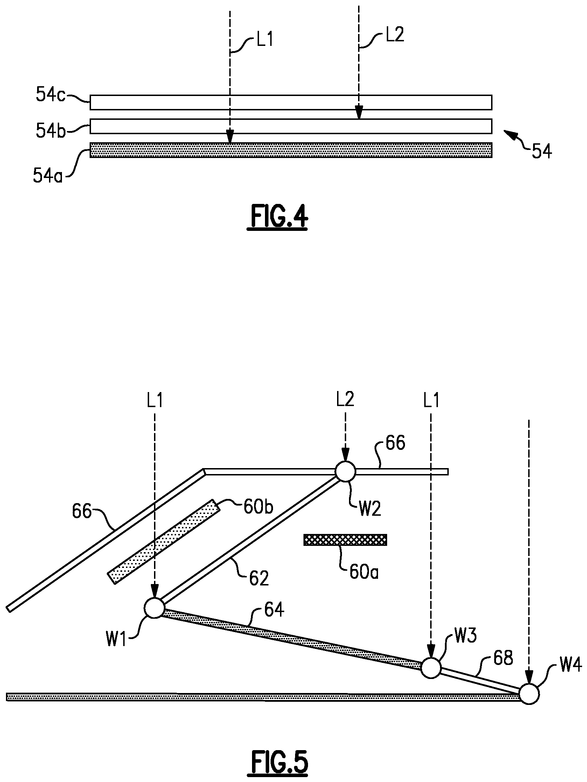

Figure 4 illustrates an example method of laser welding.
Figure 5 illustrates an example of laser blockers in a welding process.

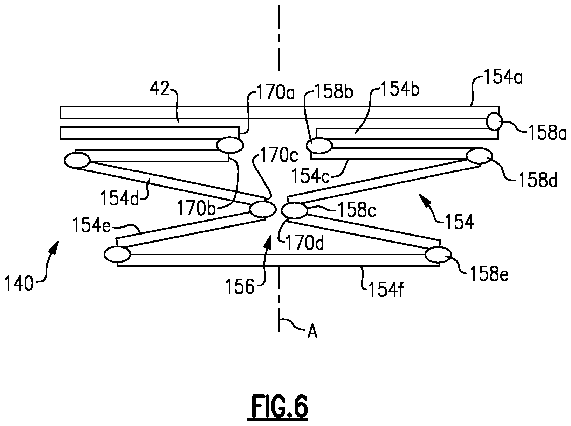

Figure 6 illustrates a sectioned view through another inflatable bladder.

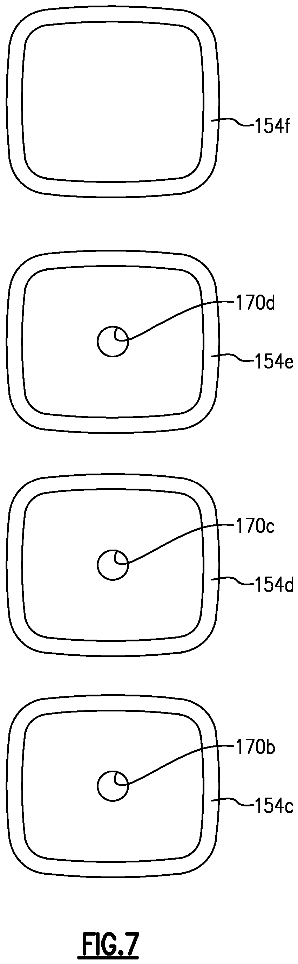

Figure 7 illustrates views of the layers of an inflatable bladder prior to being welded together.

### DETAILED DESCRIPTION

Reference will now be made in detail to embodiments, examples of which are illustrated in the accompanying drawings. In the following detailed description, numerous specific details are set forth in order to provide a thorough understanding of the various described embodiments. However, it will be apparent to one of ordinary skill in the art that the various described embodiments may be practiced without these specific details. In other instances, well-known methods, procedures, components, circuits, and networks have not been described in detail so as not to unnecessarily obscure aspects of the embodiments.

"One or more" includes a function being performed by one element, a function being performed by more than one element, *e.g.,* in a distributed fashion, several functions being performed by one element, several functions being performed by several elements, or any combination of the above.

It will also be understood that, although the terms first, second, etc. are, in some instances, used herein to describe various elements, these elements should not be limited by these terms. These terms are only used to distinguish one element from another. For example, a first contact could be termed a second contact, and, similarly, a second contact could be termed a first contact, without departing from the scope of the various described embodiments. The first contact and the second contact are both contacts, but they are not the same contact.

The terminology used in the description of the various described embodiments herein is for the purpose of describing particular embodiments only and is not intended to be limiting. As used in the description of the various described embodiments and the appended claims, the singular forms "a", "an" and "the" are intended to include the plural forms as well, unless the context clearly indicates otherwise. It will also be understood that the term "and/or" as used herein refers to and encompasses any and all possible combinations of one or more of the associated listed items. It will be further understood that the terms "includes," "including," "comprises," and/or "comprising," when used in this specification, specify the presence of stated features, integers, steps, operations, elements, and/or components, but do not preclude the presence or addition of one or more other features, integers, steps, operations, elements, components, and/or groups thereof.

As used herein, the term "if' is, optionally, construed to mean "when" or "upon" or "in response to determining" or "in response to detecting," depending on the context. Similarly, the phrase "if it is determined" or "if [a stated condition or event] is detected" is, optionally, construed to mean "upon determining" or "in response to determining" or "upon detecting [the stated condition or event]" or "in response to detecting [the stated condition or event]," depending on the context.

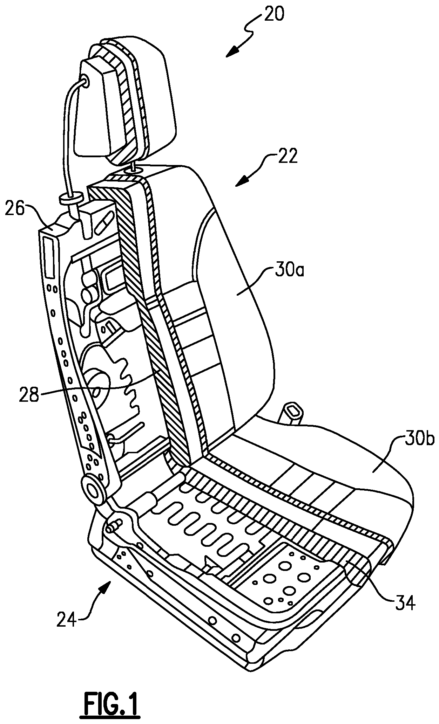

Figure 1 illustrates an example seat 20 for an automobile. In this example, the seat 20 includes a seat back 22 and a seat base 24. A seat frame 26 supports a cushion 28 in the seat back 22, which is covered by trim 30a. In the seat base 24, the frame 26 supports a bottom seat cushion 34, which is covered by seat trim 30b. Although the example seat 20 is for an automobile, it is to be understood that the examples are applicable to other types of vehicles, such as but not limited to, a motorcycle, a watercraft, an aircraft, or a locomotive.

Figure 2 illustrates selected portions of a seat system 36 for incorporation into the seat 20. The seat system 36 includes a bladder system 38 that includes one or more inflatable bladders 40 and air channels 42 in fluid communication with the bladders 40 for inflating and deflating the bladders 40. The bladders 40 are formed from polymer films (e.g., thermoplastic urethane) that are welded together to form expandable cells. The bladders 40 are attached with one or more polymer film carrier substrates 44.

The channels 42 are attached to a connector 46, which is in fluid communication with a valve bank 48. The valve bank 48 is fluidly connected with one or more pumps 50. A processor 52 is connected with the pump 50, to control operation thereof. The processor 52 may also be connected with the valve bank 48 to open and close the valves of the bank 48 to selectively provide air to the bladders 40 via the channels 42. The connector 46 serves to provide an air-tight connection between the channels 42 and the valve bank 48.

Figure 3 illustrates a sectioned view through a representative one of the bladders 40. Each bladder 40 is comprised of a plurality of laser-weldable polymer film layers 54 that form an expandable cell 56. The layers 54 are bonded together at welds 58. For example, a "weld" is a region at which two adjacent layers 54 are melt-fused together, such as by a laser welding process, to form an airtight weld seam. The term "laser-weldable" refers to polymer film layers that are capable of being welded together by laser welding to form an airtight weld seam. Example laser-weldable films include, but are not limited to, thermoplastic urethanes, polystyrene, polyamide, polybutylene terephthalate, or other thermoplastics that are laser absorbent to generate heat, melting and fusing, without substantial thermal degradation.

Figure 4 illustrates an example method of laser welding that may be used to form the bladder 40. The method involves stacking the layers 54 together, one on top of the other. At least one of the layers 54 is a colored film layer, designated at 54a, and there are at least first and second uncolored film layers 54b/54c. It is to be appreciated that additional colored and/or uncolored layers may be used. A "colored" film layer is a layer that includes an additive that makes the layer opaque, and thus absorbent, to the laser at a wavelength that is used for the welding. The additive may be dispersed through the polymer of the film, or provided as a surface coating on the film. An example additive includes, but is not limited to, carbon black. An "uncolored" film layer excludes any additives that make the layer opaque such that the layer is transparent, and thus non-absorbent, to the laser at the wavelength used for welding. An uncolored layer need not be perfectly transparent to the laser, as long as the nominal amount of laser absorption does not generate enough heat to melt and fuse the layer (with the laser being sufficient to weld other layers). As an example, 85% transmission or greater is considered to be transparent for purposes of this disclosure, and less than 85% is opaque.

As an example, the uncolored layers 54b/54c are transparent to a laser L1 of a first wavelength, while the colored layer 54a is opaque to (absorbent of) the laser L1. Thus, laser L1, when directed at the stack of layers 54, passes through the uncolored layers 54b/54c and impinges on the colored layer 54a. The colored layer 54a absorbs the laser L1, which generates heat. The temperature at the interface between the colored layer 54a and the adjacent uncolored layer 54b rapidly increases and causes localized melting in the layers 44a/44b that, upon solidifying, fuses the layers 54a/54b together in an airtight weld. The laser L1 is moved along a welding path to form an airtight seam between the layers 54a/54b. Suitable laser power, pulse frequency, and welding speed can be identified by those of ordinary skill who have the benefit of this disclosure.

The uncolored layers 54b/54c are opaque to (absorbent of) a laser L2 of a second wavelength (different from the first wavelength). Thus, laser L2, when directed at the stack of layers 44, is substantially absorbed by the layers 54b/54c, though a portion of the laser L2 may pass through. The absorbance generates heat at the interface between the layers 54b/54c, causing localized melting in the layers 54b/54c that, upon solidifying, fuses the layers 54b/54c together in a weld. The laser L2 can be moved along a welding path to form an airtight seam between the layers 54b/54c. The wavelengths of the lasers L1 and L2 may vary in dependence upon the type of polymer that the layers 54 are made of, as well as the type of additive. As an example, the lasers L1 and L2 have wavelengths of 1000 nm to 2000 nm, respectively.

Figure 5 demonstrates the use of laser blockers in the welding process. There are two types of laser blockers, designated at 60a and 60b. The laser blocker 60a is comprised of a tape or a film that is non-transparent to the laser, thus blocking the laser. The uncolored layers are not fully absorbent of the laser L2 and the laser blocker 60a is thus placed under the uncolored film layers to block any portion of the laser L2 that passes through the uncolored layers and thus prevent undesired welding any film layers below the uncolored layers. The laser blocker 60b is comprised of an uncolored tape or film that is transparent to the laser L1. If the localized heating of a weld does not rapidly dissipate, the heat can transfer to adjacent layers and cause unwanted sticking or welding of the adjacent layers. The laser blocker 60b is thus placed between the primary weld location and the adjacent layers to provide a physical thermal barrier that prevents the adjacent layers from being undesirably welded.

In the example of Figure 5, there are four welds designated at W1, W2, W3, and W4. Weld W1 is conducted with laser L1 between an uncolored layer 62 and a colored layer 64. The laser blocker 60b is situated above the weld W1, between the weld W1 and uncolored layer 66. The laser blocker 60b prevents the uncolored layer 66 above the weld W1 from being undesirably welded. Weld W2 is conducted with laser L2 between an uncolored layer 66 and uncolored layer 62. The laser blocker 60a is provided below weld W2 to block portions of the laser L2 that pass through the layers 62 and 66 from impinging on the layer 64 below. Weld W3 is conducted with laser L1 between an uncolored layer 68 and the colored layer 64. No laser blockers are needed for weld W3, as the colored layer 64 blocks the laser L1 and prevents pass-through. A laser blocker 60b may be used above weld W3, between the weld W3 and uncolored layer 66 if there is found to be undesired sticking or welding of the layer 66. No laser blockers are used for weld W4, as there are no layers above or below the weld W4.

Figure 6 illustrates a sectioned view through another example of a bladder 140 for use in the bladder system 38 above. The bladder 140 is comprised of a stack of laser-weldable polymer film layers 154 that form an expandable cell 156. The layers 154 include first and second substrate layers 154a/154b that are bonded together at a weld 158a such that the channel 42 is defined between the layer 154a/154b. The second substrate layer 154b has a first port 170a (e.g., a circular opening) in fluid communication with the air channel 42. There is a colored film layer 154c that includes a second port 170b that is aligned with the first port 170a. For instance, the ports 170a/170b are aligned when the centers of the ports 170a/170b align. The colored film layer 154c is bonded to the second substrate layer 154b by a first ring weld 158b. For example, a ring weld is a closed-loop weld path, such as a circular path, that circumscribes the ports 170a/170b. First and second pleat layers 154d/154e include respectively, first and second pleat layer orifices 170c/170d that are aligned with each other. The pleat layers 154d/154e are bonded together by a second ring weld 158c that circumscribes the first and second pleat layer orifices 170c/170d. The first pleat layer 154d is also bonded with the colored film layer 154c by a first perimeter ring weld 158d, which extends around the perimeter of the colored film layer 154c and the first pleat layer 154d. An end layer 154f is bonded with the second pleat layer 154e by a second perimeter ring weld 158e around a perimeter of the end layer 154f. The second substrate layer 165b, the colored layer 154c, the first and second pleat layers 154d/154e, and the end layer 154f define therebetween a cell 156 that is inflatable via air provided through the air channel 42. The first ring weld 158b, the second ring weld 158c, the first perimeter ring weld 158d, and the second perimeter ring weld 158e are each endless loops. The layers 154c/154d/154e/154f are also shown individually by plan view in Figure 7.

Although the layers 154 and spacings in Figure 6 are not necessarily to scale, the welds 158a/158b/158c/158d/158e are all offset from one another such that they are non-intersecting. That is, the weld path of each weld 158a/158b/158c/158d/158e does not cross the weld path of any of the other welds 158a/158b/158c/158d/158e. As an example, the bladder 140 is disposed about a central axis A that intersects the centers of each of the ports 170a/170b/170c/170d, and with respect to radial proximity P_{weld} (e.g., in millimeters) to the axis A, P_{second} ring weld < P_{first} ring weld < P_{second} perimeter ring weld < P_{first} perimeter ring weld. That is, the radial proximity of the second ring weld 158c is less than the radial proximity of the first ring weld 158b, which is less than the radial proximity of the second perimeter ring weld 158e, which is less than the radial proximity of the first ring weld 158a.

Such an offset permits all of the welds 158a/158b/158c/158d/158e to be conducted on the stack of layers 154 without having to sequentially add layers to the stack after each weld or after any of the welds. For example, all of the layers 154 are initially provided in a stack with the ports 170a/170b aligned and the orifices 170c/170d aligned. The weld 158a can then be conducted from above or below the stack. Welding from above means that the laser is above the stack, which is at the top in Figure 6. Welding from below means that the laser is below the stack, which is at the bottom in Figure 6. The weld 158b can be conducted from above the stack, the weld 158c can be conducted from below the stack, and the welds 158d/158e can be conducted from below the stack. Thus, each weld can be made without having to move or fold any of the layers 154 out of the way and without having to make a weld and then add the next layer or layers before making the next weld, which reduces the labor involved in the welding process. In other words, each weld has a weldable line-of-sight in the initial stack of layers in that the location of the weld is accessible by laser without necessarily having to move other layers 154 out of the way. This further permits the welds to be made in any order. The weld blockers 60a/60b may also be used as discussed above.

Although a combination of features is shown in the illustrated examples, not all of them need to be combined to realize the benefits of various embodiments of this disclosure. In other words, a system designed according to an embodiment of this disclosure will not necessarily include all of the features shown in any one of the Figures or all of the portions schematically shown in the Figures. Moreover, selected features of one example embodiment may be combined with selected features of other example embodiments.

The preceding description is exemplary rather than limiting in nature. Variations and modifications to the disclosed examples may become apparent to those skilled in the art that do not necessarily depart from this disclosure. The scope of legal protection given to this disclosure can only be determined by studying the following claims.

## Claims

1. A method comprising:
stacking a plurality of laser-weldable polymer film layers, the laser-weldable polymer film layers including at least one colored film layer at least first and second uncolored film layers;
directing a laser beam of a first wavelength at the stack of film layers and moving the laser beam along a first welding path, the laser beam impinging the at least one colored film layer and producing localized heating and welding of the at least one colored film layer and the first uncolored film layer to each other along the first welding path; and
directing a laser beam of a second wavelength different than the first wavelength at the stack of film layers and moving the laser beam along a second welding path that is offset from the first welding path the laser beam impinging the second uncolored layer and producing localized heating and welding of the second uncolored layer and the first uncolored layer to each other along the second welding path.

2. The method as recited in claim 1, wherein the laser beam of the first wavelength passing through at least one of the first and second uncolored film layers before impinging the colored film layer.

3. The method as recited in any of the preceding claims, wherein the first and second wavelengths are 1000-2000 nm.

4. The method as recited in any of the preceding claims, wherein the at least one colored film layer including a carbon additive and the at least first and second uncolored film layers excluding carbon additive.

5. The method as recited in any of the preceding claims, wherein the laser-weldable polymer film layers are TPU,
and/or wherein the at least first and second uncolored film layers are transparent to the laser beam of the first wavelength.

6. The method as recited in any of the preceding claims, wherein the first and second welding paths are endless loops,
wherein preferably the endless loops are non-intersecting of each other.

7. The method as recited in any of the preceding claims, further comprising providing a laser blocker under the at least first and second uncolored film layers, the laser blocker blocking the laser beam from impinging on any of the laser-weldable polymer film layers below the at least first and second uncolored film layers.

8. The method as recited in claim 7, wherein the laser blocker is colored.

9. The method as recited in claim 7, further comprising providing a weld blocker above the at least first and second uncolored film layers, the weld blocker preventing the at least first and second uncolored film layers from welding to any of the laser-weldable polymer film layers above the at least first and second uncolored film layers,
wherein preferably the weld blocker is uncolored.

10. The method as recited in any of the preceding claims, wherein the welding forms a pleated inflatable bladder,
and/or wherein the at least one of the laser-weldable polymer film layers includes air channels.

11. An article comprising:
a stack of laser-welded polymer film layers comprising:
first and second substrate layers including substrate that define an air channel between the first and second substrate layers, the second substrate layer having a first port in fluid communication with the air channel,
a colored film including a second port aligned with the first port, the colored film layer bonded to the second substrate layer by a first ring weld circumscribing the first and second ports,
first and second pleat layers including, respectively, first and second pleat layer orifices that are aligned with each other, the first and second pleat layers bonded together by a second ring weld circumscribing the first and second pleat layer orifices, and first pleat layer bonded with the colored film layer by a first perimeter ring weld around a perimeter of the first pleat layer,
an end layer bonded with the second pleat layer by a second perimeter ring weld around a perimeter of the end layer, and
the second substrate layer, the colored layer, the first and second pleat layers, and the end layer defining therebetween a bladder chamber that is inflatable via air provided through the air channel.

12. The article as recited in claim 11, wherein the colored film layer includes a carbon additive and the first and second substrate layers, the first and second pleat layers, and the end layer excluding carbon additive.

13. The article as recited in claim 11 or 12, wherein the laser-welded polymer film layers are TPU.

14. The article as recited in any of claims 11 to 13, wherein the first ring weld, the second ring weld, the first perimeter ring weld, and the second perimeter ring weld are endless loops, and/or wherein the first ring weld, the second ring weld, the first perimeter ring weld, and the second perimeter ring weld are all non-intersecting of each other.

15. The article as recited in any of claims 11 to 14, wherein, the first and second ports define a central axis, and, with respect to radial proximity P_{weld} to the central axis, P_{second ring} weld < P_{first} ring weld < P_{second} perimeter ring weld < P_{first} perimeter ring _{weld}.
